# FASCICULE DE BREVET EUROPEEN

(11) **EP 4 210 277 B1**
(45) Date de publication et mention de la délivrance du brevet: **18.12.2024**
(21) Numéro de dépôt: 22305005.5
(22) Date de dépôt: 05.01.2022
(51) Int. Cl.: H04L 9/40, H04L 67/02, H04L 67/10, H04L 67/14

(54) **PROCÉDÉ DE CRÉATION D'UN CANAL DE COMMUNICATION ENTRE UNE APPLICATION LOCALE ET UNE APPLICATION SAAS, ET PROCÉDÉ ET SYSTÈME DE COMMUNICATION ENTRE LESDITES APPLICATIONS**
VERFAHREN ZUM HERSTELLEN EINES KOMMUNIKATIONSKANALS ZWISCHEN EINER LOKALEN ANWENDUNG UND EINER SAAS-ANWENDUNG UND VERFAHREN UND SYSTEM ZUR KOMMUNIKATION ZWISCHEN DIESEN ANWENDUNGEN
METHOD FOR CREATING A COMMUNICATION CHANNEL BETWEEN A LOCAL APPLICATION AND AN SAAS APPLICATION, AND METHOD AND SYSTEM FOR COMMUNICATION BETWEEN SAID APPLICATIONS

(43) Date de publication de la demande: 12.07.2023
(73) Titulaire: Bull SAS, 78340 Les Clayes-sous-Bois (FR)
(72) Inventeur: GUIONNEAU, Christophe, 38000 GRENOBLE (FR)
(74) Mandataire: IPAZ

(56) Documents cités:
- US-A1- 2020 153 818
- US-B1- 9 716 701

## Description

La présente invention concerne un procédé de création d'un canal de communication entre une application locale, en particulier hébergée sur un serveur local se trouvant dans un réseau informatique, dit réseau local, et une application as a Service, dite application SaaS, hébergée dans le cloud et en particulier sur un serveur d'application se trouvant hors dudit réseau informatique. Elle concerne également un procédé et un système de communication entre lesdites applications locales et SaaS.

Le domaine de l'invention est le domaine de la communication entre d'une part une application locale hébergée au sein d'un réseau informatique et d'autre part une application en modes SaaS hébergée sur un serveur se trouvant à l'extérieur dudit réseau informatique.

### État de la technique

Les entreprises utilisent de plus en plus d'applications "as a service" hébergées dans le cloud, appelées applications SaaS ou applications web ou encore application distante, dans la présente demande. Ces applications SaaS nécessitent une authentification des utilisateurs. Pour diverses raisons, les entreprises ont transféré la gestion des identités et des accès vers un fournisseur d'identité as a service, IDAAS, hébergé dans le cloud, dans un serveur externe au réseau informatique de l'entreprise, et appelé serveur IDAAS (« IDentity As A Service »).

Il existe aussi des applications se trouvant dans le réseau informatique de l'entreprise, appelées « applications locales » dans ce document. L'accès à ces applications est géré par un serveur d'identité se trouvant dans le réseau local.

Cependant, il existe des besoins pour faire communiquer une application SaaS avec une application locale. Une première solution consiste en la mise en place d'un VPN mais cette solution est très intrusive et difficile à mettre, en particulier du fait de la mise en relation de réseaux disjoints sans plages d'adressages cohérentes. Une solution alternative serait de déporter le serveur IDAAS dans le réseau local mais cela est incompatible avec l'utilité même du serveur IDAAS. H

US2020153818 A1, divulgue des systèmes et des procédés pour une redirection SaaS sécurisée à partir d'applications natives. US9716701 B1, divulgue un système d'analyse logiciel en tant que service et procédé d'analyse du trafic Web.

Un but de la présente invention est de remédier à au moins un des inconvénients précités.

Un autre but de la présente invention est de proposer une solution permettant de mettre en communication une application locale avec une application SaaS.

Il est aussi un but de la présente invention de proposer une solution permettant de mettre en communication une application locale avec une application SaaS, de manière plus simple, moins lourde et moins instructive que les solutions actuelles.

### Exposé de l'invention

L'invention permet d'atteindre au moins l'un des buts précités par un procédé de création d'un canal de communication entre d'une part une application locale hébergée sur un serveur, dit local, dans un réseau informatique, dit réseau local, et d'autre part une application as a service, dite application SaaS, hébergée sur un serveur d'application distant dudit réseau local, au travers d'un réseau privé, dit réseau IDAAS, comprenant un serveur d'identité as a service, dit serveur IDAAS, utilisé pour réguler l'accès à ladite application SaaS, ledit réseau local étant en communication avec ledit réseau IDAAS au travers du réseau Internet, ledit procédé comprenant les étapes suivantes :
- génération, dans ledit réseau IDAAS, d'un point d'accès SSL et association dudit point d'accès à un port de communication avec ladite application SaaS, dans ledit réseau IDAAS ; et
- génération, par un proxy, dit proxy IDAAS local, se trouvant dans ledit réseau local, d'une connexion SSL associée :
   ▪ audit point d'accès SSL dans ledit réseau IDAAS, et
   ▪ à un port de communication avec ladite application locale dans ledit réseau local.

Ainsi, pour faire communiquer l'application locale avec l'application SaaS, l'invention propose d'utiliser un proxy dans le réseau local, et de créer, par ce proxy, une connexion SSL. Cette connexion SSL est associée, en particulier de manière exclusive, avec un port de communication correspondant à l'application locale et permettant de communiquer avec l'application locale dans le réseau local. En outre, cette connexion SSL est utilisée pour accéder, préférentiellement de manière exclusive, à un point d'accès SSL créé dans le réseau IDAAS. Le point d'accès SSL créé dans le réseau IDAAS est lui-même associé, en particulier de manière exclusive, avec un port de communication avec l'application SaaS dans ledit réseau IDAAS. Ainsi, l'invention permet d'obtenir un canal de communication entre l'application locale et l'application SaaS de manière plus simple et moins lourde que les solutions actuelles.

De plus, le proxy, respectivement le point d'accès SSL, peut être exécuté par un appareil ou un serveur déjà présent dans le réseau local, respectivement le réseau IDAAS : ce qui permet de mettre en oeuvre la présente invention sans utilisation d'appareil supplémentaire et sans modification de l'architecture du réseau local, respectivement du réseau IDAAS. Ainsi, l'invention peut être mise en oeuvre avec des coûts réduits et sans intrusion importante dans les réseaux concernés.

De plus, dans la présente invention, la communication entre l'application locale et l'application SaaS est toujours initiée par l'application locale qui a l'initiative d'envoyer, ou non, des données vers les points d'accès SSL. Ainsi, la sécurité du réseau locale est entièrement sauvegardée tout en permettant aux applications locales et SaaS de communiquer entre-elles.

Au moins un, en particulier chaque, port de de communication peut être un port TCP.

Le serveur d'application peut être un serveur se trouvant dans la réseau IDAAS.

Alternativement, le serveur d'application peut ne pas se trouver dans le réseau IDAAS. Dans ce cas, le serveur d'application a une connexion, et les privilèges, qui lui permet d'atteindre le serveur IDAAS, par exemple au travers du réseau Internet.

La connexion SSL a pour fonction de chiffrer les données sortantes, c'est-à-dire les données émises par l'application locale à destination de l'application SaaS, et de déchiffrer les données entrantes, c'est-à-dire les données provenant de l'application SaaS à destination de l'application locale.

Avantageusement, dans le réseau local, le proxy IDAAS local peut être mis en oeuvre sous forme logicielle, par exemple par un processus exécuté sur un serveur faisant partie du réseau local.

Dans certains modes de réalisation, le réseau local peut en outre comprendre un proxy Internet disposé entre le réseau Internet et le proxy IDAAS local.

Dans ce cas, la connexion SSL générée pour, et associé à, l'application locale peut être de type HTTP-CONNECT, permettant de tunneler des données chiffrées dans les deux sens et de passer au travers dudit proxy Internet dudit réseau local. En effet, dans ce cas, le proxy IDAAS local demande au proxy Internet du réseau local la création d'un tunnel TCP vers la destination désirée, à savoir le point d'accès dont l'adresse IP est connue. Le proxy Internet du réseau local créé alors un tunnel permettant au proxy IDAAS local de communiquer avec le point d'accès SSL se trouvant dans le réseau IDAAS.

Avantageusement, le procédé selon l'invention peut comprendre avant l'étape de génération de la connexion SSL, une étape démarrage du proxy IDAAS local et de configuration dudit proxy IDAAS local avec un fichier de configuration mémorisé au sein du réseau local.

Dans ce cas, au démarrage du procédé, le proxy IDAAS local est démarré. En particulier, le processus correspondant au proxy IDAAS local est démarré. Puis, le proxy IDAAS local lit une configuration minimale dans un fichier de configuration mémorisé en local. Ce fichier de configuration local a préalablement été obtenu depuis le réseau IDAAS, et en particulier depuis le serveur IDAAS ou encore depuis un composant d'administration du réseau IDAAS.

Suivant un exemple de réalisation non limitatif, le fichier de configuration minimale peut comprendre :
- un nom et/ou une adresse d'un serveur de point d'accès SSL, dans le réseau IDAAS et configuré pour créer le(s) point(s) d'accès SSL dans la réseau IDAAS,
- un mot de passe, ou une clef, permettant de s'identifier auprès du serveur IDAAS, et
- éventuellement une URL de proxy du côté du réseau IDAAS, le cas échéant.

Ainsi, au démarrage, le proxy IDAAS local peut se configurer avec une configuration minimale en attendant la génération d'une connexion SSL pour chaque application locale.

Avantageusement, le procédé selon l'invention peut en outre comprendre, avant l'étape de génération de la connexion SSL, une étape de récupération, par le proxy IDAAS local, de données relatives au point d'accès SSL auprès du réseau IDAAS.

Dans ce cas, le proxy IDAAS local, peut obtenir auprès du serveur de points d'accès un fichier de configuration détaillée indiquant le ou les points d'accès SSL qui doivent être utilisés pour telle ou telle application locale. Autrement dit, ce fichier indique au proxy IDAAS local quel point d'accès SSL utiliser pour quelle application locale.

Par exemple, le fichier de configuration détaillée peut comprendre pour chaque application :
- une adresse URL du point d'accès, et
- optionnellement un certificat SSL à utiliser.

Ce fichier de configuration détaillée peut être obtenu périodiquement par le proxy IDAAS local selon une fréquence donnée, pour prendre en compte d'éventuelles modifications.

Le certificat SSL n'est pas obligatoire, si le point d'accès SSL présente un certificat vérifiable avec les autorités de certification déjà disponibles sur le système où s'exécute le proxy. Il peut néanmoins être nécessaire si le certificat n'est pas émis par une autorité de certificat officielle/connue/vérifiable. Le certificat présent dans la configuration sera alors comparé avec le certificat obtenu dans la communication SSL avec le point d'accès SSL. Cette technique s'appelle « pinnage de certificat » (Certificate Pinning), elle permet de se passer de l'utilisation des autorités de certification).

Mais dans un autre mode de réalisation, le certificat de la configuration pourrait être utilisé, non pas pour vérifier l'identité du serveur, mais pour identifier la partie cliente.

Donc, la communication entre le/chaque point d'accès et le proxy IDAAS local peut utiliser :
- soit un certificat SSL à utiliser par le proxy IDAAS local, pour s'authentifier au près du point d'accès SSL ;
- soit un certificat du point d'accès SSL et qui devra être vérifier lors de l'établissement de la connexion

Avantageusement, le proxy IDAAS local ouvre une connexion SSL pour l'application locale, en particulier chaque application locale, et maintient ladite connexion SSL ouverte.

Tel qu'indiqué plus haut, chaque connexion SSL est associée à une adresse IP du point d'accès SSL et un port de communication interne au réseau local associé à, et préférentiellement dédié à, l'application locale. Lorsque l'application locale souhaite communiquer avec l'application SaaS, il émet ces données sur le port de communication en question. Le proxy IDAAS local récupère ces données et les chiffre conformément au certificat SSL de la connexion SSL. Les données chiffrées sont alors émises vers le point d'accès SSL associé à la connexion SSL.

Suivant des modes de réalisation, le point d'accès SSL peut être créé entre un proxy Internet, dit proxy IDAAS distant, du réseau IDAAS et le réseau Internet. Dans ce cas, le port de communication associé au point d'accès est un port dudit proxy IDAAS distant, lui-même associé à un port correspondant à l'application SaaS.

Autrement dit, dans ce cas, le réseau IDAAS comprend un proxy Internet, appelé proxy IDAAS distant. Ce proxy IDAAS distant réalise, de manière classique, une association entre deux ports de communications : l'un du côté du réseau Internet et associé au point d'accès SSL et l'autre du côté de l'application SaaS et associé à l'application SaaS.

Ainsi, des données émises pas l'application locale transitent au travers de la connexion SSL jusqu'au point d'accès SSL. Celui-ci déchiffre ces données et les transmets sur un premier port du proxy IDAAS distant qui lui est associé. Le proxy IDAAS distant reçoit les données déchiffrées sur le premier port et les transmets sur un deuxième port associé à, et préférentiellement dédié à, l'application SaaS de sorte que les données sont reçues par ladite application SaaS.

Les données émises par l'application SaaS vers l'application locale transitent dans le sens inverse, c'est dire depuis l'application SaaS vers le deuxième port du proxy IDAAS distant, puis du premier port du proxy IDAAS distant vers le point d'accès SSL. Là, ces données sont chiffrées conformément au certificat SSL et transmises vers l'application locale au travers de la connexion SSL.

Suivant un autre aspect de la présente invention, il est proposé un procédé de communication d'une application locale hébergée sur un serveur, dit local, dans un réseau informatique, dit réseau local, avec une application as a service, dite application SaaS, hébergée sur un serveur d'application distant dudit réseau local, au travers d'un réseau privé, dit réseau IDAAS, comprenant un serveur d'identité as a service, dit serveur IDAAS, utilisé pour réguler l'accès à ladite application SaaS, ledit réseau local étant en communication avec ledit réseau IDAAS au travers du réseau Internet, ledit procédé comprenant les étapes suivantes :
- création d'un canal de communication entre lesdites applications par le procédé selon l'invention, et
- échange de données entre lesdites applications au travers dudit canal de communication.

Suivant un autre aspect de la présente invention, il est proposé un système de communication entre une application locale hébergée sur un serveur, dit local, dans un réseau informatique, dit réseau local, et une application as a service, dite application SaaS, hébergée sur un serveur d'application distant dudit réseau local, au travers d'un réseau privé, dit réseau IDAAS, comprenant un serveur d'identité as a service, dit serveur IDAAS, utilisé pour réguler l'accès à ladite application SaaS, ledit réseau local étant en communication avec ledit réseau IDAAS au travers du réseau Internet, ledit système comprenant :
- un générateur de points d'accès, dans ledit réseau IDAAS, pour générer un point d'accès SSL et associer ledit point d'accès à un port de communication avec ladite application SaaS dans ledit réseau IDAAS ; et
- un proxy, dit proxy IDAAS local, dans ledit réseau local, pour générer une connexion SSL associée :
   ▪ audit point d'accès SSL dans ledit réseau IDAAS, et
   ▪ à un port de communication avec ladite application locale dans ledit réseau local.

Suivant des modes de réalisation, le réseau local peut comprendre un proxy Internet disposé entre le réseau Internet et le proxy IDAAS local. Dans ce cas, la connexion SSL ouverte pour l'application locale peut être de type HTTP-CONNECT, permettant de tunneler des données chiffrées dans les deux sens et de passer au travers dudit proxy internet dudit réseau local.

Suivant des modes de réalisation, le point d'accès SSL peut se trouver entre un proxy Internet, dit proxy IDAAS distant, du réseau IDAAS et le réseau Internet. Dans ce cas, le port de communication associé audit point d'accès SSL est un port dudit proxy IDAAS distant.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un système de communication selon l'invention ;
- la FIGURE 2 est une représentation schématique d'un exemple de réalisation non limitatif d'un procédé de création d'un canal de communication entre une application locale et une application SaaS ; et
- la FIGURE 3 est une représentation schématique d'un exemple de réalisation non limitatif d'un procédé de communication selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

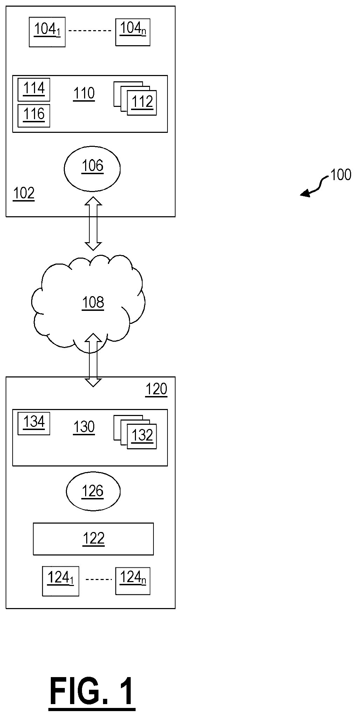

La FIGURE 1 est une représentation schématique d'un exemple de réalisation non limitatif d'un système de communication selon l'invention.

Le système 100, représenté sur la FIGURE 1, peut être mis en oeuvre pour permettre à une application locale, se trouvant dans un réseau informatique local, de communiquer avec une application SaaS se trouvant hors dudit réseau informatique local, au travers d'un réseau IDAAS comprenant un serveur IDAAS régulant l'accès à ladite application SaaS.

Le réseau informatique local peut par exemple être un réseau d'entreprise, un réseau domestique, ou tout autre réseau informatique.

La FIGURE 1 représente le réseau local 102 dans lequel sont hébergées des applications locales 104₁-104ₙ, avec n≥. Chaque application locale 104ᵢ peut être accédée dans le réseau local 102, sans sortir dudit réseau local 102. L'accès à chaque application peut être réguler par un serveur d'identité (non représenté) au sein dudit réseau local 102.

De manière optionnelle, le réseau local 102 comprend un proxy Internet 106 permettant aux appareils du réseau local 102 d'accéder au réseau Internet 108 de manière sécurisée.

La FIGURE 1 représente en outre un réseau 120, dit réseau IDAAS, distant dudit réseau local 102, pouvant communiquer avec ledit réseau local 102 au travers du réseau Internet 108.

Le réseau IDAAS 120 comprend un serveur IDAAS 122 qui gère l'accès à des applications en mode SaaS, dite applications SaaS, au travers de processus 124₁-124ₙ, dédié chacun à une application SaaS. Chaque application SaaS peut être hébergée dans le réseau IDAAS 122. Alternativement, chaque application SaaS peut être hébergée dans un serveur, ou encore dans le cloud, hors dudit réseau IDAAS 122. Dans tous les cas, le serveur IDAAS 122 peut échanger des données avec chaque application SaaS au travers du processus 124ᵢ qui lui est dédié.

Le réseau 120 comprend en outre, de manière optionnelle, un proxy Internet 126 permettant au serveur IDAAS 122, ainsi qu'aux autres appareils du réseau IDAAS de communiquer avec des appareils se trouvant à l'extérieur dudit réseau IDAAS 120 au travers du réseau Internet 108.

Selon l'invention, le système 100 comprend, dans le réseau IDAAS 120, un serveur 130 de point(s) d'accès SSL, configuré pour générer un point d'accès SSL 132 pour chaque application SaaS. Chaque point d'accès SSL 132 :
- comporte une adresse URL permettant d'accéder audit point d'accès SSL depuis le réseau Internet 108, et
- est associé, dans le réseau IDAAS 120, à un port de communication avec le processus 124ᵢ dédié à la communication avec l'application SaaS.

Dans l'exemple représenté, puisque le réseau IDAAS 120 comprend un proxy Internet 126 entre le serveur IDAAS 122 et chaque point d'accès SSL 132, chaque point d'accès SSL 132 est associé à un premier port de communication dudit proxy Internet 126, ledit premier port étant lui-même associé à un deuxième port dudit proxy Internet 126 associé mui-même au processus 124ᵢ. Dans le cas où le réseau IDAAS 120 ne comprend pas le proxy Internet 126, alors chaque point d'accès 132 peut être associé directement à un port de communication avec le processus 124ᵢ de l'application SaaS à laquelle est associé ledit point d'accès SSL 132.

Chaque port de communication peut être un port TCP.

Le serveur de point d'accès SSL 130 est configuré avec un fichier de configuration 134 dans lequel chaque point d'accès SSL est associé avec un port de communication attribué à une application SaaS. Ce fichier est tenu et mis à jour dans le réseau IDAAS 120, par exemple par un composant d'administration du réseau IDAAS 120.

Le système 100 comprend en outre, dans le réseau local 102, un proxy 110, appelé proxy IDAAS local, configuré pour générer des connexions SSL 112 entre chaque application locale 104ᵢ et un point d'accès SSL 132 se trouvant dans le réseau IDAAS 120. En particulier, chaque connexion SSL 112 est associée à :
- un port de communication avec une application locale 104ᵢ, dans le réseau local 110, et
- un point d'accès SSL 132, connue, par exemple grâce à son adresse URL, et se trouvant dans le réseau IDAAS 120.

Le proxy IDAAS local 110 est configuré tout d'abord avec un fichier de configuration minimale 114. Ensuite, chaque connexion SSL 112 est générée grâce à des données contenues dans un fichier de configuration 116, reçu du réseau IDAAS 120, et en particulier d'un composant d'administration du réseau IDAAS 120. Le fichier de configuration minimale 114 peut comprendre une adresse URL permettant au proxy IDAAS local de télécharger le fichier de configuration 116 depuis le réseau IDAAS 120 par exemple.

Le fichier de configuration 116, respectivement le fichier de configuration 114, est tenu et mis à jour par ledit composant d'administration. Il peut être téléchargé de manière périodique pour prendre en compte d'éventuels changements.

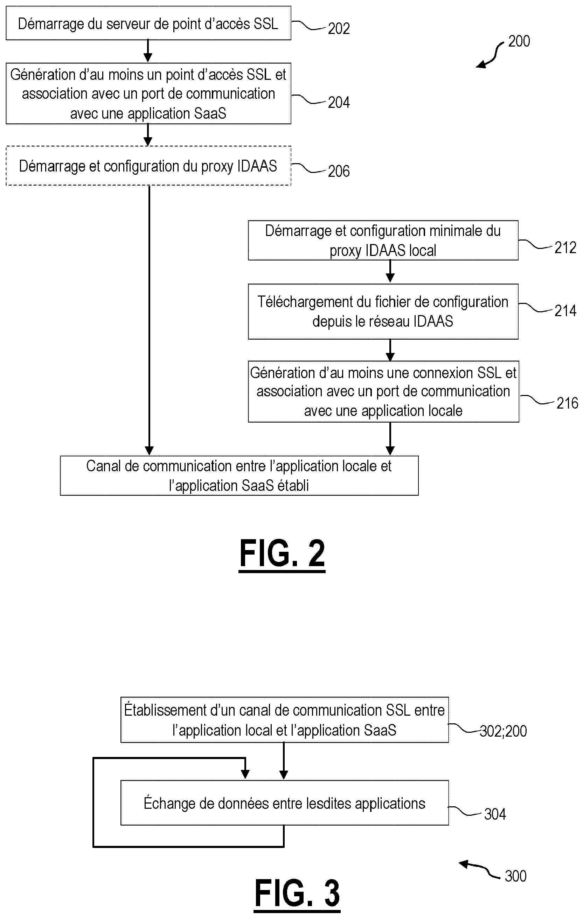

La FIGURE 2 est une représentation schématique d'un exemple de réalisation non limitatif d'un procédé selon l'invention de création d'un canal de communication entre une application locale et une application SaaS.

Le procédé 200, représenté sur la FIGURE 2, peut être mis en oeuvre dans un système selon l'invention, et en particulier dans le système 100 de la FIGURE 1.

Le procédé 200 comprend, une étape 202 de démarrage d'un générateur, ou d'un serveur, de points d'accès SSL au niveau du réseau IDAAS, c'est-à-dire dans le réseau dans lequel se trouve le serveur IDAAS. Ce serveur de points d'accès a pour rôle de générer un point d'accès SSL pour chaque application SaaS, permettant de communiquer avec ladite application SaaS depuis l'extérieur du réseau IDAAS.

Lors d'une étape 204, le serveur de points d'accès SSL génère, pour chaque application SaaS, un point d'accès SSL. La génération des points d'accès SSL est réalisée en fonction de données contenues dans un fichier de configuration mémorisé dans le réseau IDAAS. Ce fichier de configuration est tenu, et est mis à jour, par un composant d'administration du réseau IDAAS. Ce fichier de configuration indique pour chaque application SaaS :
- l'adresse URL du point d'accès SSL à générer, et
- le port de communication, en particulier TCP, dans le réseau IDAAS, permettant de communiquer avec l'application SaaS.

Le port de communication avec une application SaaS peut être un port de communication d'un serveur d'application se trouvant dans le réseau IDAAS. Alternativement, le port de communication avec une application SaaS peut être un premier port de communication d'un proxy, appelé proxy IDAAS, se trouvant dans le réseau IDAAS, comme dans l'exemple de la FIGURE 1. Dans ce cas, le procédé 200 comprend en outre une étape 206, optionnelle, de démarrage et de configuration dudit proxy IDAAS. La configuration du proxy IDAAS est réalisée avec un fichier de configuration. Ce fichier peut être fourni et mis à jour par le composant d'administration du réseau IDAAS. Ce fichier de configuration du proxy IDAAS indique pour chaque premier port de communication dudit proxy IDAAS associé à un point d'accès SSL, un deuxième port de communication avec l'application SaaS à laquelle est associée ce point d'accès SSL. Ainsi, le proxy IDAAS reçoit sur le premier port de communication des données provenant du point d'accès SSL et à destination de l'application SaaS, et les transmets vers ladite application SaaS par le deuxième port de communication.

De manière avantageuse, le fichier de configuration du proxy IDAS peut être consulté périodiquement pour prendre en compte une modification ou une mise à jour dudit fichier, et ainsi mettre à jour les points d'accès SSL.

Les étapes 202-206 sont réalisées au niveau du réseau IDAAS.

Le procédé 200 comprend en outre une étape 212 de démarrage et de configuration du proxy IDAAS local se trouvant dans le réseau local, c'est-à-dire dans le réseau où se trouvent l'application locale. En particulier, le proxy IDAAS local est démarré et configuré avec une configuration minimale grâce à un fichier de configuration minimale mémorisé dans le réseau local, et en particulier dans l'appareil ou le serveur exécutant ledit proxy IDAAS local. Ce fichier de configuration minimale peut être préalablement téléchargé depuis le réseau IDAAS et en particulier depuis un composant d'administration du réseau IDAAS. Ce fichier de configuration minimale peut par exemple indiquer une adresse URL, ou un nom d'un appareil, dans le réseau IDAAS, depuis lequel/laquelle peut être téléchargé un fichier de configuration détaillé indiquant les données pour la création des connexions SSL associées aux points d'accès SSL.

Puis, lors d'une étape 214, le fichier de configuration détaillée est téléchargé depuis le réseau IDAAS. Le fichier de configuration détaillé indique, pour chaque application SaaS, l'adresse URL du point d'accès SSL associé à l'application SaaS, ainsi que le certificat SSL.

Lors d'une étape 216, le proxy IDAAS local génère pour chaque application local une connexion SSL et associe cette connexion SSL :
- d'une part à l'adresse URL du point d'accès SSL, dans le réseau IDAAS, associé à l'application SaaS, et
- d'autre part à un port de communication, en particulier TCP, avec l'application local, dans le réseau local.

De manière avantageuse, le fichier de configuration détaillée peut être téléchargé périodiquement pour prendre en compte une modification ou une mise à jour dudit fichier, et ainsi mettre à jour les connexions SSL.

Les étapes 212-216 sont réalisées au niveau du réseau IDAAS.

Ainsi, après l'exécution des étapes 202-206 du côté du réseau IDAAS et des étapes 212-216 du côté du réseau local, un canal de communication SSL sécurisée est établie entre l'application locale exécutée dans le réseau local et une application SaaS exécutée sur un serveur d'application se trouvant hors dudit réseau local.

On comprend que le canal de communication SSL ainsi créé permet une communication bidirectionnelle entre les applications locale et SaaS, à l'initiative de l'application locale, et permet d'échanger des données entre lesdites applications de manière bidirectionnelle.

La FIGURE 3 est une représentation schématique d'un exemple de réalisation non limitatif d'un procédé selon l'invention de communication entre une application locale et une application SaaS.

Le procédé 300, représenté sur la FIGURE 3, peut être mis en oeuvre dans un système selon l'invention, et en particulier dans le système 100 de la FIGURE 1.

Le procédé 300 comprend une étape 302 de création d'un canal de communication SSL entre l'application locale et l'application SaaS par le procédé selon l'invention de création d'un canal de communication entre lesdites applications, et en particulier par le procédé 200 de la FIGURE 2.

Le procédé 300 comprend ensuite une étape d'échanges de données entre lesdites applications, à l'initiative de l'application locale. L'étape 304 peut être réitérée autant de fois que souhaitée.

En particulier, lorsque l'application locale souhaite émettre des données vers l'application SaaS, lesdites données sont émises par ladite application locale sur le port de communication associé à la connexion SSL dans le réseau local. Ces données sont reçues par le proxy IDAAS local dans le réseau local et sont chiffrées conformément au certificat SSL. Puis, les données chiffrées sont envoyées vers le point d'accès SSL associé à la connexion SSL, au travers de la connexion SSL, en traversant le proxy Internet le cas échant, puis le réseau Internet, et ce, jusqu'au réseau IDAAS. Les données chiffrées sont reçues, dans le réseau IDAAS, par le point d'accès SSL. Le point d'accès SSL déchiffre les données reçues et les émet sur le port de communication avec l'application SaaS, dans le réseau IDAAS. Lorsque ce port de communication est un premier port d'un proxy IDAAS dans le réseau IDAAS, le proxy IDAAS reçoit ces données sur ledit premier port et les réémets sur un deuxième port associé à l'application SaaS. Les données déchiffrées sont transmises, au travers du deuxième port, soit à l'application SaaS, soit à un processus lié à l'application SaaS qui les lui transmet.

Le cas échéant, la transmission des données de l'application SaaS vers l'application locale se fait dans le sens inverse, par exemple lorsque l'application SaaS répond à une requête de l'application locale. En particulier, les données sont émises par l'application SaaS et reçues sur le deuxième port du proxy IDAAS, qui les redirige sur le premier port de communication. Les données sont ensuite reçues par le point d'accès SSL qui les chiffre et les émet, au travers de la connexion SSL, vers le réseau local au travers du réseau Internet. Les données chiffrées sont reçues par le proxy IDAAS local, optionnellement après avoir traversé le proxy Internet du réseau local. Le proxy IDAAS local déchiffre les données reçues et les transmets, dans le réseau local, à l'application locale par le port de communication avec ladite application locale.

Comme indiqué plus haut, l'utilisation d'un proxy IDAAS dans le réseau IDAAS est optionnelle. Dans ce cas, les données déchiffrées par le point d'accès SSL sont transmises à l'application SaaS, ou à un processus lié à l'application SaaS. De même, les données émises par l'application SaaS sont reçues par le point d'accès SSL sans transiter par un proxy IDAAS dans le réseau IDAAS.

De plus, l'utilisation d'un proxy Internet dans le réseau local est aussi optionnelle. Dans ce cas, les données chiffrées par le proxy IDAAS local dans le réseau local sont transmises par ledit proxy IDAAS local vers le réseau Internet. De même, les données chiffrées émises par le point d'accès SSL dans le réseau IDAAS sont reçues par le proxy IDAAS local sans transiter par un proxy Internet dans le réseau local.

Bien entendu, les exemples décrits plus haut sont donnés à titre d'exemples particuliers uniquement et l'invention n'est pas limitée à ces exemples. De nombreuses variantes peuvent être imaginées aux exemples donnés ci-dessus sans sortir du cadre de l'invention telle que définie dans les revendications.

## Revendications

1. Procédé (200) de création d'un canal de communication entre d'une part une application locale (104₁-104ₙ) hébergée sur un serveur, dit local, dans un réseau informatique (102), dit réseau local, et d'autre part une application as a service, dite application SaaS, hébergée sur un serveur d'application distant dudit réseau local (102), au travers d'un réseau privé (120), dit réseau IDAAS, comprenant un serveur d'identité as a service, dit serveur IDAAS, utilisé pour réguler l'accès à ladite application SaaS, ledit réseau local (102) étant en communication avec ledit réseau IDAAS (120) au travers du réseau Internet (108), ledit procédé (200) **caractérisé par** les étapes suivantes :
- génération (204), dans ledit réseau IDAAS, d'un point d'accès SSL (132) et association dudit point d'accès (132) à un port de communication avec ladite application SaaS, dans ledit réseau IDAAS (120) ; et
- génération (216), par un proxy (110), dit proxy IDAAS local, se trouvant dans ledit réseau local (102), d'une connexion SSL (112) associée :
▪ audit point d'accès SSL (132) dans ledit réseau IDAAS (120), et
▪ à un port de communication avec ladite application locale (104₁-104ₙ) dans ledit réseau local (102).

2. Procédé (200) selon la revendication précédente, **caractérisé en ce que** le réseau local (102) comprend un proxy Internet (106) disposé entre le réseau Internet (108) et le proxy IDAAS local (110), et **en ce que** la connexion SSL (112) générée pour l'application locale (104₁-104ₙ) est de type HTTP-CONNECT, permettant de tunneler des données chiffrées dans les deux sens et de passer au travers dudit proxy Internet (106) dudit réseau local (110).

3. Procédé (200) selon l'une quelconque des revendications précédentes, **caractérisé en ce qu'**il comprend, avant l'étape (216) de génération de la connexion SSL (112), une étape (212) démarrage du proxy IDAAS local et de configuration dudit proxy IDAAS local (110) avec un fichier de configuration (114) mémorisé au sein du réseau local (102).

4. Procédé (200) selon l'une quelconque des revendications précédentes, **caractérisé en ce qu'**il comprend, avant l'étape (216) de génération de la connexion SSL (112), une étape (214) de récupération, par le proxy IDAAS local (110), de données relatives au point d'accès auprès du réseau IDAAS (120).

5. Procédé (200) selon l'une quelconque des revendications précédentes, **caractérisé en ce que** le point d'accès (132) est créé entre un proxy Internet (126), dit proxy IDAAS distant, du réseau IDAAS (120) et le réseau Internet (108) et **en ce que** le port d'accès associé au point d'accès (132) est un port dudit proxy IDAAS (126), lui-même associé à un port correspondant à l'application SaaS.

6. Procédé (300) de communication d'une application locale (104₁-104ₙ) hébergée sur un serveur, dit local, dans un réseau informatique (102), dit réseau local, avec une application as a service, dite application SaaS, hébergée sur un serveur d'application distant dudit réseau local (102), au travers d'un réseau privé (120), dit réseau IDAAS, comprenant un serveur d'identité as a service, dit serveur IDAAS, utilisé pour réguler l'accès à ladite application SaaS, ledit réseau local (102) étant en communication avec ledit réseau IDAAS (120) au travers du réseau Internet (108), ledit procédé (300) comprenant les étapes suivantes :
- création (302;200) d'un canal de communication entre lesdites applications par le procédé (200) selon l'une quelconque des revendications précédentes, et
- échange (304) de données entre lesdites applications au travers dudit canal de communication.

7. Système (100) de communication entre une application locale (104₁-104ₙ) hébergée sur un serveur, dit local, dans un réseau informatique (102), dit réseau local, et une application as a service, dite application SaaS, hébergée sur un serveur d'application distant dudit réseau local (102), au travers d'un réseau privé (120), dit réseau IDAAS, comprenant un serveur d'identité as a service, dit serveur IDAAS, utilisé pour réguler l'accès à ladite application SaaS, ledit réseau local (102) étant en communication avec ledit réseau IDAAS (120) au travers du réseau Internet (108), ledit système (100) **caractérisé par**:
- un générateur (130) de points d'accès (132), dans ledit réseau IDAAS, pour générer un point d'accès SSL (132) et associer ledit point d'accès (132) à un port de communication avec ladite application SaaS dans ledit réseau IDAAS (120) ; et
- un proxy (110), dit proxy IDAAS local, dans ledit réseau local (102), pour générer une connexion SSL (112) associée :
▪ audit point d'accès SSL (132) dans ledit réseau IDAAS (120), et
▪ à un port de communication avec ladite application locale (104₁-104ₙ) dans ledit réseau local (102).

8. Système (100) selon la revendication précédente, **caractérisé en ce que** le réseau local (110) comprend un proxy Internet (106) disposé entre le réseau de Internet (108) et le proxy IDAAS local (110), et **en ce que** la connexion SSL (112) ouverte pour l'application locale (104₁-104ₙ) est de type HTTP-CONNECT, permettant de tunneler des données chiffrées dans les deux sens et de passer au travers dudit proxy internet (106) dudit réseau local (102).

9. Système (100) selon l'une quelconque des revendications 7 ou 8, **caractérisé en ce que** le point d'accès SSL (132) se trouve entre un proxy Internet (126), dit proxy IDAAS distant, du réseau IDAAS (120) et le réseau Internet (108), et **en ce que** le port d'accès associé audit point d'accès (132) est un port dudit proxy IDAAS distant (126).

## Patentansprüche

1. Verfahren (200) zum Erstellen eines Kommunikationskanals zwischen einerseits einer lokalen Anwendung (104₁-104ₙ), gehostet auf einem Server, genannt lokal, in einem Computernetzwerk (102), genannt lokales Netzwerk, und andererseits einer Anwendung als Dienst, genannt SaaS-Anwendung, gehostet auf einem Anwendungsserver, der von dem lokalen Netzwerk (102) entfernt ist, über ein privates Netzwerk (120), genannt IDAAS-Netzwerk, umfassend einen Identitätsserver als Dienst, genannt IDAAS-Server, der zum Regulieren des Zugangs zu der SaaS-Anwendung verwendet wird, wobei das lokale Netzwerk (102) mit dem IDAAS-Netzwerk (120) über das Internet-Netzwerk (108) in Kommunikation steht, wobei das Verfahren (200) **gekennzeichnet ist durch** die folgenden Schritte:
- Generieren (204), in dem IDAAS-Netzwerk, eines SSL-Zugangspunkts (132) und Zuordnen des Zugangspunkts (132) zu einem Kommunikationsport mit der SaaS-Anwendung in dem IDAAS-Netzwerk (120); und
- Generieren (216), durch einen Proxy (110), genannt lokaler IDAAS-Proxy, der sich in dem lokalen Netzwerk (102) befindet, eines SSL-Anschlusses (112), der zugeordnet ist zu:
■ dem SSL-Zugangspunkt (132) in dem IDAAS-Netzwerk (120) und
■ einem Kommunikationsport mit der lokalen Anwendung (104₁-104ₙ) in dem lokalen Netzwerk (102).

2. Verfahren (200) nach dem vorstehenden Anspruch,
**dadurch gekennzeichnet, dass** das lokale Netzwerk (102) einen Internet-Proxy (106) umfasst, der zwischen dem Internet-Netzwerk (108) und dem lokalen IDAAS-Proxy (110) angeordnet ist, und **dadurch, dass** der SSL-Anschluss (112), der für die lokale Anwendung (104₁-104ₙ) generiert wird, von dem Typ HTTP-CONNECT ist, der ein Tunneln verschlüsselter Daten in die zwei Richtungen und das Weiterleiten über den Internet-Proxy (106) des lokalen Netzwerks (110) ermöglicht.

3. Verfahren (200) nach einem der vorstehenden Ansprüche,
**dadurch gekennzeichnet, dass** es vor dem Schritt (216) des Generierens des SSL-Anschlusses (112) einen Schritt (212) eines Startens des lokalen IDAAS-Proxys und des Konfigurierens des lokalen IDAAS-Proxys (110) mit einer Konfigurationsdatei (114), die innerhalb des lokalen Netzwerks (102) gespeichert ist, umfasst.

4. Verfahren (200) nach einem der vorstehenden Ansprüche,
**dadurch gekennzeichnet, dass** es vor dem Schritt (216) des Generierens des SSL-Anschlusses (112) einen Schritt (214) eines Wiederherstellens, durch den lokalen IDAAS-Proxy (110), von Daten bezogen auf den Zugangspunkt neben dem IDAAS-Netzwerk (120) umfasst.

5. Verfahren (200) nach einem der vorstehenden Ansprüche,
**dadurch gekennzeichnet, dass** der Zugangspunkt (132) zwischen einem Internet-Proxy (126), genannt entfernter IDAAS-Proxy, des IDAAS-Netzwerks (120) und dem Internet-Netzwerk (108) erstellt wird, und **dadurch, dass** der Zugangsport, der dem Zugangspunkt (132) zugeordnet ist, ein Port des IDAAS-Proxys (126) ist, der wiederum einem Port zugeordnet ist, der der SaaS-Anwendung entspricht.

6. Verfahren (300) zur Kommunikation einer lokalen Anwendung (104₁-104ₙ), gehostet auf einem Server, genannt lokal, in einem Computernetzwerk (102), genannt lokales Netzwerk, mit einer Anwendung als Dienst, genannt SaaS-Anwendung, gehostet auf einem Anwendungsserver, der von dem lokalen Netzwerk (102) entfernt ist, über ein privates Netzwerk (120), genannt IDAAS-Netzwerk, umfassend einen Identitätsserver als Dienst, genannt IDAAS-Server, der zum Regulieren des Zugangs zu der SaaS-Anwendung verwendet wird, wobei das lokale Netzwerk (102) mit dem IDAAS-Netzwerk (120) über das Internet-Netzwerk (108) in Kommuikation steht, das Verfahren (300) umfassend die folgenden Schritte:
- Erstellen (302;200) eines Kommunikationskanals zwischen den Anwendungen durch das Verfahren (200) nach einem der vorstehenden Ansprüche, und
- Austauschen (304) von Daten zwischen den Anwendungen über den Kommunikationskanal.

7. System (100) für die Kommunikation zwischen einer lokalen Anwendung (104₁-104ₙ), gehostet auf einem Server, genannt lokal, in einem Computernetzwerk (102), genannt lokales Netzwerk, und einer Anwendung als Dienst, genannt SaaS-Anwendung, gehostet auf einem Anwendungsserver, der von dem lokalen Netzwerk (102) entfernt ist, über ein privates Netzwerk (120), genannt IDAAS-Netzwerk, umfassend einen Identitätsserver als Dienst, genannt IDAAS-Server, der zum Regulieren des Zugangs zu der SaaS-Anwendung verwendet wird, wobei das lokale Netzwerk (102) mit dem IDAAS-Netzwerk (120) über das Internet-Netzwerk (108) in Kommunikation steht, wobei das System (100) **gekennzeichnet ist durch:**
- einen Generator (130) von Zugangspunkten (132) in dem IDAAS-Netzwerk zum Generieren eines SSL-Zugangspunkts (132) und zum Zuordnen des Zugangspunkts (132) zu einem Kommunikationsport mit der SaaS-Anwendung in dem IDAAS-Netzwerk (120); und
- einen Proxy (110), genannt lokaler IDAAS-Proxy, in dem lokalen Netzwerk (102), zum Generieren eines SSL-Anschlusses (112), der zugeordnet ist zu:
■ dem SSL-Zugangspunkt (132) in dem IDAAS-Netzwerk (120) und
■ einem Kommunikationsport mit der lokalen Anwendung (104₁-104ₙ) in dem lokalen Netzwerk (102).

8. System (100) nach dem vorstehenden Anspruch,
**dadurch gekennzeichnet, dass** das lokale Netzwerk (110) einen Internet-Proxy (106) umfasst, der zwischen dem Internet-Netzwerk (108) und dem lokalen IDAAS-Proxy (110) angeordnet ist, und **dadurch, dass** der SSL-Anschluss (112), der für die lokale Anwendung (104₁-104ₙ) geöffnet ist, von dem Typ HTTP-CONNECT ist, der ein Tunneln verschlüsselter Daten in die zwei Richtungen und das Weiterleiten über den Internet-Proxy (106) des lokalen Netzwerks (102) ermöglicht.

9. System (100) nach einem der Ansprüche 7 oder 8,
**dadurch gekennzeichnet, dass** sich der SSL-Zugangspunkt (132) zwischen einem Internet-Proxy (126), genannt entfernter IDAAS-Proxy, des IDAAS-Netzwerks (120) und dem Internet-Netzwerk (108) befindet, und dadurch, dass der Zugangsport, der dem Zugangspunkt (132) zugeordnet ist, ein Port des entfernten IDAAS-Proxys (126) ist.

## Claims

1. A method (200) for creating a communication channel between, on the one hand, a local application (104₁-104ₙ) hosted on a so-called local server, in a computer network (102), so-called local network, and on the other hand, an application as a service, so-called SaaS application, hosted on an application server remote from said local network (102), via a private network (120), so-called IDAAS network, comprising an identity as a service server, so-called IDAAS server, used to regulate access to said SaaS application, said local network (102) communicating with said IDAAS network (120) via the Internet network (108), said method (200) being **characterized by** the following steps:
- generating (204), in said IDAAS network, an SSL access point (132) and associating said access point (132) to a port for communicating with said SaaS application, in said IDAAS network (120); and
- generating (216), by a proxy (110), so-called local IDAAS proxy, located in said local network (102), an SSL connection (112) associated with:
▪ said SSL access point (132) in said IDAAS network (120), and
▪ a port for communicating with said local application (104₁-104ₙ) in said local network (102).

2. The method (200) according to the preceding claim, **characterized in that** the local network (102) comprises an Internet proxy (106) located between the Internet network (108) and the local IDAAS proxy (110), and **in that** the SSL connection (112) generated for the local application (104₁-104ₙ) is of the HTTP-CONNECT type, for tunneling encrypted data in both directions and passing through said Internet proxy (106) of said local network (110).

3. The method (200) according to any one of the preceding claims, **characterized in that** it comprises, before the step (216) of generating the SSL connection (112), a step (212) of starting the local IDAAS proxy and of configuring said local IDAAS proxy (110) with a configuration file (114) stored within the local network (102).

4. The method (200) according to any one of the preceding claims, **characterized in that** it comprises, before the step (216) of generating the SSL connection (112), a step (214) of retrieving, by the local IDAAS proxy (110), data relating to the access point from the IDAAS network (120).

5. The method (200) according to any one of the preceding claims, **characterized in that** the access point (132) is created between an Internet proxy (126), so-called remote IDAAS proxy, of the IDAAS network (120), and the Internet network (108) and **in that** the access port associated with the access point (132) is a port of said remote IDAAS proxy (126), itself associated with a port corresponding to the SaaS application.

6. The method (300) for communicating between a local application (104₁-104ₙ) hosted on a so-called local server, in a computer network (102), so-called local network, and an application as a service, so-called SaaS application, hosted on an application server remote from said local network (102), via a private network (120), so-called IDAAS network, comprising an identity as a service server, so-called IDAAS server, used to regulate access to said SaaS application, said local network (102) communicating with said IDAAS network (120) via the Internet network (108), said method (300) comprising the following steps:
- creating (302;200) a channel for communicating between said applications by the method (200) according to any one of the preceding claims, and
- exchanging (304) data between said applications via said communication channel.

7. A communication system (100) between a local application (104₁-104ₙ) hosted on a so-called local server, in a computer network (102), so-called local network, and an application as a service, so-called SaaS application, hosted on an application server remote from said local network (102), via a private network (120), so-called IDAAS network, comprising an identity as a service server, so-called IDAAS server, used to regulate access to said SaaS application, said local network (102) communicating with said IDAAS network (120) via the Internet network (108), said system (100) being **characterized by**:
- a generator (130) of access points (132), in said IDAAS network, to generate an SSL access point (132) and associate said access point (132) to a port for communicating with said SaaS application in said IDAAS network (120); and
- a proxy (110), so-called local IDAAS proxy, in said local network (102), for generating an SSL connection (112) associated with:
▪ said SSL access point (132) in said IDAAS network (120), and
▪ a port for communicating with said local application (104₁-104ₙ) in said local network (102).

8. The system (100) according to the preceding claim, **characterized in that** the local network (110) comprises an Internet proxy (106) located between the Internet network (108) and the local IDAAS proxy (110), and **in that** the open SSL connection (112) for the local application (104₁-104ₙ) is of the HTTP-CONNECT type, for tunneling encrypted data in both directions and passing through said Internet proxy (106) of said local network (102).

9. The system (100) according to any one of claims 7 or 8, **characterized in that** the SSL access point (132) is between an Internet proxy (126), so-called remote IDAAS proxy, of the IDAAS network (120) and the Internet network (108), and **in that** the access port associated with said access point (132) is a port of said remote IDAAS proxy (126).
